# EUROPÄISCHE PATENTSCHRIFT

(11) **EP 0 535 526 B1**
(45) Veröffentlichungstag und Bekanntmachung des Hinweises auf die Patenterteilung: **09.11.1994**
(21) Anmeldenummer: 92116315.0
(22) Anmeldetag: 24.09.1992
(51) Int. Cl.: C08L 23/02, C08L 63/00

(54) **In-Situ Polyesterlegierungen**
In-situ polyester alloys
In-situ alliages de polyester

(30) Priorität: 01.10.1991 DE 4132671
(43) Veröffentlichungstag der Anmeldung: 07.04.1993
(73) Patentinhaber: REHAU AG + Co, 95111 Rehau (DE)
(72) Erfinder: Mülhaupt, Rolf, Prof. Dr., W-7800 Freiburg (DE); Rösch, Joachim, Dipl.-Chem., W-7803 Gundelfingen (DE); Hopperdietzel, Siegfried, Dr., W-8673 Rehau (DE); Weinberg, Ekkehard, Dr., W-8673 Rehau (DE); Klein, Herbert, Dr., W-8673 Rehau (DE)

(56) Entgegenhaltungen:
- EP-A- 0 141 733
- EP-A- 0 335 394
- EP-A- 0 379 809
- EP-A- 0 443 346
- US-A- 4 237 242
- US-A- 4 728 698

## Beschreibung

Die vorliegende Erfindung betrifft thermoplastisch verarbeitbare, Polyester enthaltende Polymerlegierungen sowie Verfahren zu deren Herstellung. Die Polyester enthaltende Polymerlegierung ist dadurch gekennzeichnet, daß ein oder mehrere thermoplastische Polymere, die bei Temperaturen unterhalb von 400 Grad Celsius verarbeitbar sind (Komponente A), mit einem oder mehreren linearen, verzweigten oder cyclischen, nieder- oder hochmolekularen Mono-, Di- Tri-,
Tetra- oder Polycarbonsäureanhydriden mit dem Strukturelement R¹ (CO-O-CO)ₓ , worin R¹ zwei oder mehrwertige aliphatische, araliphatische, aromatische, heterocyclische oder heteroatomhaltige Reste bedeuten und x eine ganze Zahl von 1 bis 500 ist, oder mit Polycarbonsäureanhydriden, die die Carbonsäureanhydridfunktion im Polymerrückgrat in der wiederkehrenden Monomereinheit enthalten, (Komponente B), und einer oder mehreren niedermolekularen Oxiranverbindungen aus der Gruppe: Oxiranverbindungen, erhalten durch Epoxidierung von C=C - Doppelbindungen, nämlich epoxidierte lineare, verzweigte oder cyclische Olefine, epoxidierte vinylterminierte Oligomere des Ethylens, epoxidierte Vinyliden- bzw. Vinyl-terminierte Oligomere des Propylens, Cyclohexens, Cyclododecens und Cyclododecatriens, vollständig oder teilweise epoxidierte Fette, Pflanzenöle, Fettsäuren, Fettsäurederivate und Terpene, sowie Glycidylether von mono-, di- oder polyfunktionellen
Alkoholen, Phenolen oder Aminen (Komponente C), legiert werden, wobei die Komponenten (B) und (C) miteinander in der Schmelze der Komponente (A) zur Reaktion gebracht werden, wobei lineare, verzweigte oder vernetzte Polyester gebildet werden.

Die vorliegende Erfindung ermöglicht die Herstellung von Materialien, die als Formmassen, Filme, Folien Schläuche, Klebstoffe, Extrudate, Membranen und Barriereharze von besonderem Interesse sind. Verwendet man als Komponente (B) nachwachsende Rohstoffe, so können synthetische Materialien auf Basis von Erdöl ersetzt werden. Durch Polymerisation von Epoxiden mit Carbonsäureanhydriden in der Schmelze der Komponente (A) können Polyesterlegierungen mit sehr breitem Eigenschaftsprofil, von hochflexibel bis steif, hergestellt werden. Die Verträglichkeit der Polyesterkomponente,
(B) + (C), und thermoplastischer Komponente (A) können durch Wahl geeigneter Komponenten (B) und (C) gezielt variiert werden. Eine Herstellung der Polyester in einem separaten Schritt ist nicht erforderlich und kann direkt während der Verarbeitung der Komponente (A) erfolgen ("reactive blending"). Durch Polymerisation von Epoxiden mit Carbonsäureanhydriden können Phasenvermittler für Polymermischungen (A) in-situ gebildet werden, um beispielsweise unverträgliche polare und unpolare Polymersysteme zu kompatibilisieren und eine Phasendispergierung und Phasenanbindung der unverträglichen Komponente zu ermöglichen.

Die Polymerisation von mono- oder polyfunktionellen Oxiranen mit Carbonsäureanhydriden ist in der Duroplastchemie bekannt und wird beispielsweise bei Elektrogießharzen eingesetzt. Es entstehen hochvernetzte Polymere, die nicht mehr thermoplastisch verarbeitbar sind. Carbonsäureanhydridfunktionelle Polymere, z.B. Elastomere, können mit Epoxidharzen vernetzt werden. In der US Patentschrift 3.371.070 werden Polyanhydride von dimeren Fettsäuren als Härter für Epoxidharze beschrieben. Es entstehen ebenfalls vernetzte, duroplastische Materialien. Legierungen mit Thermoplasten, z.B. Olefinhomo- und -copolymeren, sind nicht beschrieben. Polymerlegierungen aus zwei oder mehreren thermoplastischen Kunststoffen, beispielsweise Polypropylen und Ethylen-Propylen-Copolymeren, sind bekannt. Ebenso bekannt sind Polymerlegierungen, deren eine Legierungskomponente in der Schmelze der anderen gebildet und gleichzeitig legiert wird, wie beispielsweise anonym in Res.Discl, 1989 (301), 378 beschrieben.
EP-A-443346 beschreibt eine thermoplastische Harzzusammensetzung aus einem Polypropylen (Komponente A), einem mit Anhydriden modifizierten Polypropylen (Komponente B), und einem Epoxygruppen enthaltenden Copolymer (Komponente c), wobei die Komponenten B und C vorzugsweise im geschmolzenen Zustand verarbeitet und hierbei ggf mit Hilfe einer basischen Verbindung zur Reaktion gebracht werden, wobei ein Polyester entsteht.
EP-A-335394 beschreibt eine ähnliche Harzzusammensetzung wie EP-A-443346, die ferner einen gesättigten Polyester enthält.

Es wurde nun gefunden, daß nieder- und hochmolekulare, mono- und polyfunktionelle Carbonsäureanhydride (Komponente B) mit nieder molekularen, mono- und polyfunktionellen Oxiranen (Komponente C) direkt in der Schmelze von Thermoplasten (Komponente A) zu linearen, verzweigten oder vernetzten Polyestern umgesetzt werden können. Durch Variation der Komponenten (E) und (C) kann die Verträglichkeit des gebildeten Polyesters mit der thermoplastischen Komponente (A) gesteuert werden. Auf diese Weise können die polaren, unverträglichen Polyester mit unpolaren Thermoplasten, z.B. Ethylen- oder Propylenpolymeren, kompatibilisiert werden. Verwendet man die Komponente (A) im Überschuß, so wird der gebildete Polyester in der Matrix der Komponente (A) dispergiert. Verwendet man dagegen die Komponenten (B) und (C) im Überschuß, so kann der gebildete Polyester die kontinuierliche Phase ausbilden. Sind die Komponenten (B) und (C) flexibel, z.B. durch Kombination von epoxidierten und maleinierten Sojabohnenölen, so entstehen weiche Polymermischungen. Verwendet man dagegen kristalline oder amorphe Oxiran- und Carbonsäureanhydridverbindungen enstehen harte Polyester mit hohem Modul. Bei flüssigkristallinen Polyestern enstehen anisotrope Phasen, die eine Verstärkung der Thermoplastkomponete (A) bewirken können.

Bei der Komponente (A) handelt es sich um thermoplastisch verarbeitbare Polymere. insbesondere Olefinhomo- und copolymere. Besonders bevorzugt sind Homo- und Copolymere des Ethylens und Propylens mit Monomeren wie z.B. Vinyl-terminierte geradkettige Alkane, z.B. Buten-1, Hexen-1-, Octen-1, vinylterminierte Oligomere des Ethylens und vinyliden-bzw. vinylenterminierte Oligomere des Propylens mit Zahlenmittel des Molekulargewichtes 100 < Mₙ < 5000. Erfindungsgemäß verwendbar sind weiter Copolymere des Ethylens, z.B. Ethylen/Vinylacetat. Ethylen/(Meth)acrylsäureester, Ethylen/Kohlenmonoxid. Den Olefinhomo- und Copolymeren können auch Kautschuke, z.B. Ethylen/Propylen/(Dien), zugesetzt werden, um die Zähigkeit zu erhöhen. Ferner können Styrolhomo- und copolymere, insbesondere Styrol/Acrylnitril, Styrol/Butadien, Styrol/(Meth)acrylat, Styrol/Acrylnitril gepfropftes Polybutadien (ABS), (Meth)acrylathomo- und copolymere verwendet werden mit der Maßgabe. daß thermoplastische Verarbeitung möglich ist. Ferner können Vinylchloridhomo- und copolymere oder Polykondensate wie Polycarbonat Polyester, Polyamid, Polyurethan, verwendet werden. Bevorzugt sind Verarbeitungstemperaturen 100°C < T < 400°C. Bevorzugt sind Anteile der Komponente (A) an der Mischung von (A) und (B) und (C) von über 50 Gewichts-%.

Bei der Legierungskomponente (B) handelt es sich um lineare, verzweigte oder cyclische. nieder- oder hochmolekulare Mono-, Di- Tri- oder Polycarbonsäureanhydride, gekennzeichnet durch das Struktureiement R¹(CO-O-CO)ₓ, worin R¹ zwei- oder mehrwertige aliphatische, aromatische, araliphatische, heterocyclische oder heteroatomhaltige Reste bedeuten, und x eine ganze Zahl von 1 bis 500 ist. Beispiele für hier für mit x=1 sind cyclische Dicarbonsäurenahydride, z.B. von Bernstein-, Glutar-, Adipin-, Sebazin-, Phthal-, 1,2-Cyclohexandicarbonsäureanhydrid.

Beispiele für x=2 sind Pyromellithsäureanhydrid und Benzophenontetracarbonsäureanhydrid. Außerdem können Polymere mit Hydroxyendgruppen in difunktionelle Carbonsäureanhydride überführt werden. Beispielsweise werden die Hydroxygruppen mit dem Trimellithsäureanhydrid verkappt.

Carbonsäurenanhydride mit x>1 sind beispielsweise carbonsäureanhydridgepfropfte Polymere. Ungesättigte Carbonsäureanhydride, z.B. Maleinsäureanhydrid, Fumarsäureanhydrid, Itaconsäureanhydrid, Styrol/Maleinsäureanhydrid, können aufgepfropft werden. Als Pfropfsubstrat sind besonders Propylen- und Ethylenhomo- und copolymere geeignet. Beispiele für Pfropfcopolymere mit Carbonsäureanhydridgruppen sind maleinsäureanhydrid gepfropfte Polypropylene und Ethylen/Propylen- Copolymere sowie LLDPE und LDPE. Ferner können olefinisch ungesättigte Polymere durch die Enreaktion maleiniert werden, um Pfropfcopolymere herzustellen. Beispiele sind maleinierte Polybutadien sowie maleinierte olefinisch ungesättigte Fette, Öle und Terpene, insbesondere Sojabohnenöl. Während diese Polycarbonsäureanhydride die Carbonsäureanhydridfunktion lateral an der Polymerhauptkette enthalten, so kann die Carbonsäureanhydridgruppe auch im Polymerrückgrat in der wiederkehrenden Monomereinheit auftreten. Beispiele hier für sind Polykondensate von Dicarbonsäuren, z.B. Bernstein-, Glutar- Sebazin-, Kork, Azelain, Terephthal-, Isophthal, Dimer- und Trimerfett-, 4,4'-Diphenyldicarbonsäure, wie von K. Leong, A. Domb, E. Ron, R. Langer in Encyclopedia Polym. Sci. Eng., Supplement Vol., Wiley & Sons 1989, Seite 649-665 beschrieben. Ferner können carbonsäureterminierte Polyester und Polyether in Polyanhydride überführt werden. Durch die Wahl der Dicarbonsäurebausteine können die Eigenschaften von starr/kristallin, starr/amorph bis hochflexibel/weich variiert werden.

Bei der Komponente (C) handelt es sich um mono- oder polyfunktionelle, nieder molekulare, lineare, verzweigte oder cyclische Oxirane wie in Anspruch 1 definiert, die hergestellt werden können durch Epoxidierung von C=C - Doppelbindungen oder durch Glycidylisierung von Alkoholen, Phenolen oder Aminen. Epoxidharze sind bekannt als Duroplastmaterialien in einer Vielzahl von Anwendungen. Beispiele sind epoxidierte lineare, verzweigte oder cyclische Olefine z. B. vinylterminierte Alkane wie 1-Buten, 1-Octen-, 1-Dodecen, vinylterminierte Oligomere des Ethylens sowie Vinyliden- bzw. Vinylterminierte Oligomere des Propylens, Cyclohexen, Cyclododecen, Cyclododecatrien. Besonders geeignet sind ungesättigte Verbindungen auf der Basis nachwachsender Rohstoffe, die vollständig oder partiell epoxidiert werden. Die Epoxidierungsverfahren sind dem Fachmann bekannt. Beispiele sind vollständig oder teilweise epoxidierte Fette, Öle, Fettsäuren und deren Derivate sowie Terpene, z.B. Sojabohnen-, Raps-, Euphorbia-, Cashewnuß-, Baumwollsaat-, Erdnuß-, Kokos-, Lein-, Palmkern-, Oliven-, Mais-, Palm-, Rizinus-, Rüb-, Sonnenblumenöl, Laurolein-, Myristolein-, Palmitolrin-, Öl-, Gadolein-, Eruca-, Ricinol-, Rosin-, Abietin-, Olein- und Linolsäure sowie deren Derivate und Alkohole, Dimer- und Trimerfettsäure, Di-, Tri-, Tetra- und Sesquiterpene wie z.B. Geraniol, Myrcen, Linalol, Citronellol, Terpinen, Pinen, Farnesol, Abietinsäure, Squalen, Carotin und Vitamin A. Bevorzugt sind Materialien mit hohem Epoxidierungsgrad und monofunktionelle Oxirane. Neben der Epoxidierung können Oxirane auch durch Glycidlyisierung von mono- und polyfunktionellen Alkoholen, Phenolen und Aminen hergestellt werden wie z.B. Bisphenol A, p-Aminophenol, Polyhydroxyether, 1,4-Butandiol, Cyclohexandimethanol.

Die Umsetzung von Komponente (B) und (C) erfolgt wie in der Duroplastchemie beschrieben bei Temperaturen oberhalb von 100°C, vorzugsweise bei Carbonsäureanhydrid/Oxiran-Molverhältnissen von 0.5 bis 1.5, ganz bevorzugt 1.0. Werden monofunktionelle Carbonsäureanhydride oder Polydicarbonsäureanhydride mit monofunktionellen Oxiranen umgesetzt, so entstehen lineare Polymere. Erhöht man die Funktionalität, so bilden sich verzweigte und schließlich vernetzte Polyester. Die Eigenschaften werden durch die Wahl der Komponenten (B) und (C) gesteuert wie oben beschrieben. Flexible Oxirane polymerisiert mit flexiblen Anhydriden bilden hochflexible Polyester, die zu weichen und elastischen Polymerlegierungen führen können. Aliphatische Substituenten an Oxiran und Carbonsäureanhydrid erhöhen die Verträglichkeit der Polyester mit unpolaren Thermoplast-Komponenten (A). Starre Komponenten, z.B. aromatische Dicarbonsäureanhydride oder aromatische Polycarbonsäureanhydride kombiniert mit starren Oxiranen, z.B. Styroloxid oder Phenylglycidether, geben steife Polyester. Verwendet man mesogene Gruppen in den Komponenten (B) und (C) so können sich flüssigkristalline Polyester bilden, die zu einer Verstärkung der Komponente (A) beitragen. Die Komponente (A) kann amorph, teilkristallin oder flüssigkristallin sein.

Die Umsetzung der Komponenten (B) und (C) kann durch Zusatz der Komponente (D) beschleunigt werden. In der Gegenwart von Beschleunigem ist die Reaktion innerhalb von Minuten durchzuführen. Als Beschleuniger eignen sich sekundäre, tertiäre und quarternäre Stickstoff und Phosphorverbindungen, z.B. 2-Ethyl-Imidazol, Tetramethyl- oder Tertrabutylammoniumchlorid, Benzyltrimethylammoniumchlorid, 2-Ethylimidazol, und Metallkomplexe, z.B. Acetylacetonate des Magnesiums, Zinks, Zirkons, Aluminiums und Chroms oder Alkoxide des Aluminiums, Zirkons, Titans und Zinks. Die Reaktion erfolgt bei Temperaturen 100<T<300°C, ganz besonders bevorzugt 150°C<T<250°C.

Ein besonderes Kennzeichen dieser Erfindung, ist die Möglichkeit, die Polymerisation von (B) und (C) direkt in der Schmelze von (A) durchzuführen, während der Verarbeitung von (A). Der Anteil von (B) und (C) beträgt vorzugsweise weniger als 80 gew.-% bezüglich der Mischung aus (A), (B) und (C). Falls die Viskositäten der Komponenten (B) und (C) oder deren Mischungen zu nieder sind, können diese Komponenten in porösen Füllstoffen, beispielsweise Microcell, aufgenommen werden, und so als Pulver dosiert werden.
Neben den Komponenten (A), (B), (C) und (D) können Additive, z.B. Antioxidantien, Lichtschutzmittel, Verarbeitungshilfsmittel, Pigmente, Haftvermittler, Füllstoffe, z.B. Talk, Wollastonite, Quarzmehl, und Kurzfasern zugesetzt werden, um die Beständigkeit und mechanischen Eigenschaften der Polymermischungen zu modifizieren. Die erhaltenen Polymermischungen können je nach Beschaffenheit zu Formmassen, Filmen, Folien, Granulat verarbeitet werden. Durch Einbau der hydrophoben Polyester kann die Wasserdurchlkässigkeit reduziert werden. Polyesterlegierungskomponenten in Polyolefinen können Haftung auf Metall, Glas und Keramik sowie die Füllstoffhaftung verbessern. Die Polyester könne durch Hydrolyse mit Glykolen oder Dampf gespalten und rezykliert werden.

### Patentbeispiele

### Beispiel 1 und 2

In einem Haake Rheomix Kneter mit einer auf 200°C vorgeheizten 60 ml Mischkammer werden 30g Polypropylen (Schmelzindex 9 dg/min bei 230°C/5Kg, Hoechst PPN 1060 F) 2 Minuten bei 200°C aufgeschmolzen, dann mit 2.2g Maleinsäureanhydrid, 200mg Aluminiumacetylacetonat und 8 ml epoxidiertem Sojabohnenöl (Epoxidäquivalent 266 g/mol, Epoxidsauerstoffgehalt 6.1%, Rheoplast 39 der Firma Ciba-Geigy AG Marienberg) versetzt. Das Drehmoment fällt von 5 auf 1.2 Nm und steigt nach 3 Minuten auf 5 Nm an. Aus dem entstandenen Polymergemisch werden bei 260°C unter Vakuum 1.6 mm dicke Platten gepreßt. Für die Zugprüfung werden nach DIN 53 455 maßstabsgetreu verkleinerte Prüfkörper von 18mm Länge hergestellt und mit einer Querhauptsgeschwindigkeit von 10 mm/min vermessen, um Reißdehung, Streckspannung und Young Modul zu bestimmen. In Beispiel 2 und 3 wurde das Verhältnis von Epoxid zu Carbonsäureanhydrid variiert. Die erhaltenen Ergebnisse sind in Tabelle 1 zusammengestellt.

**Tab. 1**

| Polypropylenlegierungen mit epoxidierten Pflanzenölen | | | | | | | |
|---|---|---|---|---|---|---|---|
| Beispiel | (A) (%) | (B) (%) | (C) (%) | Drehmoment (Nm) | Y.-Modul (MPa) | Streckspannung (MPa) | Reißdehnung (%) |
| PP | 100 | - | - | 1.6 | 750 | 35 | >300 |
| Beispiel 1 | 74 | 6 | 20 | 5.0 | 390 | 22 | >300 |
| Beispiel 2 | 69+5* | 6 | 20 | 5.5 | 400 | 22 | 22 |

| | | | | | | | |
|---|---|---|---|---|---|---|---|
| * malein säure anhydrid gepfropftes Polypropylen | | | | | | | |

In Beispiel 2 wurden 5% des Polypropylens durch 5% maleinsäureanhydridgepfropftes Polypropylen (0.37 Gew-% gepfropftes Maleinsäureanhydrid, Schmelzindex bei 2.16kg/230°C: 125.3dg/min), Exxelor PO1015 der Firma Exxon) ersetzt. Es entstehen thermoplastische Materialien.

### Beispiel 3

Es wurde wie in Beispiel 1 verfahren, doch ersetzte man das Maleinsäureanhydrid durch die äquivalente Menge an Phthalsäureanhydrid. Der Drehmomentverlauf als Funktion der Zeit ist vergleichbar mit Beispiel 1.

### Beispiel 4

Es wurde wie in Beispiel 1 verfahren, allerdings ohne Zugabe von Aluminiumacetylacetonat. Der Drehmomentanstieg setzt erst nach 4 Minuten ein und erreicht nach weiteren 4 Minuten einen konstanten Wert von 4 Nm.

### Beispiel 5

Es wurde wie in Beispiel 1 verfahren und eine Mischung aus 45% Polypropylen (siehe Beispiel 1) 45% maleinsäureanhydrid-gepfropftes Polypropylenwachs (6% Maleinsäureanhydridgehalt, Epolene der Firma Kodak) und 0.2g Aluminiumacetylacetonat bei 200°C hergestellt. Der Drehmomentverlauf in der Mischkammer ist vergleichbar mit dem Drehmomentverlauf in Beispiel 1. Es bildet sich ein thermoplastisches Material.

### Beispiel 6

Wie in Beispiel 1 für Polypropylen beschrieben wurden 80 Gewichts-% Styrol/Maleinsäureanhydrid-Copolymer (Gehalt an eingebautem Maleinsäureanhydrid 5.8%) mit 20 Gewichts-% epoxidiertem Sojabohnenöl und 0.2g Aluminiumacetylacetonat bei 220°C gemischt. Während 5 Minuten erfolgt eine Zunahme des Drehmoments auf 7Nm und es bildet sich eine thermoplastisches Material.

## Patentansprüche

1. Thermoplastisch verarbeitbare, Polyester enthaltende Polymerlegierungen, erhältlich aus mindestens den drei folgenden Komponenten:
Komponente (A): ein oder mehrere thermoplastische Polymere, die in der Schmelze bei Temperaturen unterhalb von 400 Grad Celsius verarbeitbar sind;
Komponente (B): ein oder mehrere lineare, verzweigte oder cyclische, nieder- oder hochmolekulare Mono-, Di-, Tri-, Tetra- oder Polycarbonsäureanhydride mit dem Strukturelement R¹ (CO-O-CO)ₓ, worin R¹ zwei- oder mehrwertige, aliphatische, aromatische, araliphatische, heterocyclische oder heteroatomhaltige Reste bedeuten und x eine ganze Zahl von 1 bis 500 ist, oder Polycarbonsäureanhydride, die die Carbonsäureanhydridfunktion im Polymerrückgrat in der wiederkehrenden Monomereinheit enthalten;
Komponente (C) : eine oder mehrere niedermolekulare Oxiranverbindungen aus der Gruppe:
Oxiranverbindungen, erhalten durch Epoxidierung von C=C - Doppelbindungen, nämlich epoxidierte lineare, verzweigte oder cyclische Olefine, epoxidierte vinylterminierte Oligomere des Ethylens, epoxidierte Vinyliden- bzw. Vinyl-terminierte Oligomere des Propylens, Cyclohexens, Cyclododecens, Cyclododecatriens, vollständig oder teilweise epoxidierte Fette, Pflanzenöle, Fettsäuren, Fettsäurederivate und Terpene, sowie Glycidylether von mono-, di- oder polyfunktionellen Alkoholen, Phenolen oder Aminen,
wobei Komponenten (B) und (C) miteinander in der Schmelze der Komponente (A) zur Reaktion gebracht werden, wobei lineare, verzweigte oder vernetzte Polyester gebildet werden.

2. Polymerlegierungen nach Anspruch 1, dadurch gekennzeichnet, daß Komponente (A) aus unpolaren und polaren Olefinhomo- und Copolymeren besteht.

3. Polymerlegierungen nach Anspruch 1, dadurch gekennzeichnet, daß Komponente (C) aus epoxidierten Derivaten von Styrol oder Vinyltoluol besteht.

4. Polymerlegierungen nach Anspruch 1, dadurch gekennzeichnet, daß Komponente (B) ein Polycarbonsäureanhydrid ist, das die Carbonsäureanhydridfunktionen lateral an der Polymerhauptkette enthält.

5. Polymerlegierungen nach Anspruch 1, dadurch gekennzeichnet, daß das bei der Reaktion von Komponenten (B) und (C) gebildete Estergruppen enthaltende Polymer mit Komponente (A) nicht verträglich und in Komponente (A) dispergiert ist.

6. Verfahren zur Herstellung von Polymerlegierungen nach Anspruch 1, dadurch gekennzeichnet, daß Komponenten (B) und (C) in der Schmelze der Komponente (A) zu einem linearen, verzweigten oder vernetzten Polyester umgesetzt werden.

7. Verfahren zur Herstellung von Polymerlegierungen nach Anspruch 6, dadurch gekennzeichnet, daß bei der Reaktion der Komponenten (B) und (C) als Reaktionsbeschleuniger eine Komponente (D) bestehend aus Imidazolen, tertiären, aliphatischen und aromatischen Aminen, cyclischen tertiären Aminen, tertiären oder quaternären Phosphorverbindungen oder Metallkomplexen zugesetzt wird.

8. Verwendung von Polymerlegierungen gemäß den Ansprüchen 1-5 für die Herstellung von Formmassen, Filmen, Folien, Schläuchen, Klebstoffen, Extrudaten, Membranen, Barriereharzen.

## Claims

1. Processable thermoplastic polymer blends containing polyester and obtainable from at least the three following components:
component (A): one or more thermoplastic polymers, which can be processed in a melt at temperatures below 400 degrees Celsius;
component (B): one or more linear, branched or cyclic, low-molecular or high-molecular mono-, di-, tri-, tetra-or polycarboxylic acid anhydrides with the structural element R¹(CO-O-CO)ₓ, where R¹ stands for bivalent or trivalent, aliphatic, aromatic, araliphatic, heterocyclic or heteroatomic radicals and x is a whole number from 1 to 500, or polycarboxylic acid anhydrides whose carboxylic acid anhydride functional group is contained in the repeated monomer units of the polymer backbone;
component (C): one or more low-molecular oxirane compounds of the group: oxirane compounds, obtained by expoxidation of C=C double bonds, namely epoxidated linear, branched or cyclic olefins, epoxidated vinyl-terminated oligomers of ethylene, epoxidated vinylidene-terminated or vinyl-terminated oligomers of propylene, cyclohexene, cyclododecene, cyclododecatriene, fully or partially epoxidated fats, vegetable oils, fatty acids, fatty acid derivatives and terpenes, as well as glycidyl ethers of mono-, di- or polyfunctional alcohols, phenols or amines,
whereby components (B) and (C) are caused to react with each other in the melt of component (A), forming linear, branched or cross-linked polyesters.

2. Polymer blends as claimed in claim 1, characterised by the fact that component (A) consists of polar and nonpolar olefin homopolymers and copolymers.

3. Polymer blends as claimed in claim 1, characterised by the fact that component (C) consists of epoxidated derivatives of styrene or vinyltoluene.

4. Polymer blends as claimed in claim 1, characterised by the fact that component (B) is a polycarboxylic acid anhydride whose carboxylic acid anhydride functional groups are laterally arranged on the main polymer chain.

5. Polymer blends as claimed in claim 1, characterised by the fact that the polymer formed by the reaction of components (B) and (C), which contains ester groups, is not compatible with component (A) and is dispersed in component (A).

6. Method of manufacturing polymer blends as claimed in claim 1, characterised by the fact that components (B) and (C) are converted to a linear, branched or cross-linked polyester in the melt of component (A).

7. Method of manufacturing polymer blends as claimed in claim 6, characterised by the fact that a component (D), consisting of imidazoles, tertiary, aliphatic and aromatic amines, cyclic tertiary amines, tertiary or quaternary phosphorus compounds or metal complexes is used to catalyse the reaction of components (B) and (C).

8. Use of polymer blends as claimed in claims 1-5 for the manufacture of moulding compounds, films, sheets, parisons, adhesives, extrudates, membranes, barrier resins.

## Revendications

1. Alliages de polymères contenant du polyester pouvant subir un traitement thermoplastique, disponible sur base des trois composants suivants au moins:
Composant (A): un ou plusieurs polymères thermoplastiques transformables en fusion à des températures en-dessous de 400 degrés Celsius;
Composant (B): un ou plusieurs anhydrides d'acide monocarboxylique, dicarboxylique, tricarboxylique, tétracarboxylique ou polycarboxylique linéaires, ramifiés ou cycliques, de poids moléculaire bas ou élevé avec l'élément structural R¹ (CO-O-CO)ₓ, R¹ signifiant des restes acycliques, aromatiques, araliphatiques, hétérocycliques ou hétéroatomes bivalents ou polyvalents et x un nombre entier de 1 à 500, ou des anhydrides d'acide polycarboxylique contenant la fonction anhydride de l'acide carboxylique sur la bavure dorsale du polymère dans l'unité redevenant monomère;
Composant (C): une ou plusieurs combinaisons d'oxyde d'éthylène de poids moléculaire bas du groupe: combinaisons d'oxyde d'éthylène, obtenues par l'époxidation de liaisons doubles C=C, c'est-à-dire des oléfines époxidées linéaires, ramifiées ou cycliques, des oligomères époxidés vinylés de l'éthylène, vinylidènes époxydés ou des oligomères vinylidés du propylène, cyclohexène, cyclododécène, cyclododécatrien, graisses complètement ou partiellement époxidées, huiles végétales, acides gras, dérivés d'acides gras et terpènes ainsi qu'éther glycidylique d'alcools, de phénols ou d'amines monofonctionnels, difonctionnels ou polyfonctionnels bien qu'au cours de la fusion des composants (B) et (C) ensemble avec le composant (A) on obtient une réaction au cours de laquelle des polyesters linéaires, ramifiés ou réticulés se forment.

2. Alliages de polymères selon la revendication 1, caractérisés par le fait que le composant (A) se compose d'oléfinhomomères et copolymères bon polaires et polaires.

3. Les alliages de polymères selon la revendication 1, caractérisés par le fait que le composant (C) se compose de dérivés époxidés de styrène ou de vinyltoluol.

4. Les alliages de polymères selon la revendication 1, caractérisés par le fait que le composant (B) est un anhydride de l'acide polycarboxylique contenant des fonctions de l'anhydride de l'acide carboxylique latérales sur la chaîne principale des polymères.

5. Les alliages de polymères selon la revendication 1, caractérisés par le fait que le polymère formé au cours de la réaction du composant (B) et (C) et contenant des groupes d'esters n'est pas compatible avec le composant (A) et est dispersé dans le composant (A).

6. Procédé de fabrication d'alliages de polymères selon la revendication 1, caractérisé par le fait que les composants (B) et (C) dans la fusion du composant (A) se transforment en un polyester linéaire, ramifié ou réticulé.

7. Procédé de fabrication d'alliages de polymères selon la revendication 6, caractérisé par le fait que lors de la réaction des composants (B) et (C) en tant qu'accélérateur de réaction un composant (D) est ajouté, se composant d'imidazoles, d'amines tertiaires, aliphatiques et aromatiques, d'amines tertiaires cycliques de combinaisons phosphoriques tertiaires ou quaternaires ou de complexes métalliques.

8. Utilisation d'alliages de polymères selon les revendications 1-5 pour la fabrication de matières moulables, de films, de feuilles, de tuyaux, de colles, de produits d'extrusion, de membranes, de résines de barrières.
